(19) Europäisches Patentamt / European Patent Office / Office européen des brevets

(11) EP 2 492 742 A1

(12) **EUROPEAN PATENT APPLICATION**
published in accordance with Art. 153(4) EPC

(43) Date of publication:
**29.08.2012 Bulletin 2012/35**

(51) Int Cl.:
*G02F 1/13357* (2006.01)     *F21S 2/00* (2006.01)
*F21V 23/00* (2006.01)     *G02F 1/1333* (2006.01)
*F21Y 101/02* (2006.01)

(21) Application number: **10825041.6**

(22) Date of filing: **22.10.2010**

(86) International application number:
**PCT/JP2010/068664**

(87) International publication number:
**WO 2011/049192 (28.04.2011 Gazette 2011/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2009 JP 2009244468**
**21.10.2010 JP 2010236007**

(71) Applicant: **Sharp Kabushiki Kaisha**
**Osaka-shi, Osaka 545-8522 (JP)**

(72) Inventor: **OHKI, Kentaroh**
**Osaka-shi, Osaka 545-8522 (JP)**

(74) Representative: **Müller - Hoffmann & Partner Patentanwälte**
**Innere Wiener Strasse 17**
**81667 München (DE)**

(54) **LIQUID CRYSTAL DISPLAY DEVICE AND TELEVISION RECEIVER**

(57)     Disclosed is a liquid crystal displaying apparatus wherein generation of sounds due to vibration of an LED substrate used in an LED backlight is suppressed. The liquid crystal displaying apparatus drives the LED by means of PWM control using the LED backlight. An LED substrate 1 having the LED disposed thereon has a front surface pattern 201 having the LED 2 provided on the mounting surface, and a rear surface pattern 202 provided on the rear surface side of the front surface pattern. The rear surface pattern 202 is not a circuit pattern for driving the LED, but is provided so as to dissipate heat and to prevent warping of the substrate. Furthermore, the rear surface pattern 202 has a structure which is grounded. In the grounded structure, an electrically conductive tape 205 is attached on the rear surface pattern 202, and electricity is carried by having the electrically conductive tape 205 in contact with a backlight chassis 101.

FIG.4

EP 2 492 742 A1

**Description**

TECHNICAL FIELD

The present invention relates to a liquid crystal displaying apparatus and a television receiving apparatus and more particularly to a liquid crystal displaying apparatus having a configuration with a substrate of a backlight attached to a backlight chassis and a television receiving apparatus including the liquid crystal displaying apparatus.

BACKGROUND ART

A liquid crystal displaying apparatus represented by a liquid crystal television receiver recently becomes widely used that employs a light emitting diode (LED (Light Emitting Diode)) as a light source of a backlight. Changing the light source of the backlight from a conventional cold-cathode tube to LED enables a thinner size and a longer life of the liquid crystal displaying apparatus and is expected to further save electric power.
An LED is a point light source, has a higher degree of freedom of light source layout as compared to the cold-cathode tube, and enables brightness adjustment in a more segmentalized video displaying area. Therefore, a backlight using LED as a light source contributes to image quality improvement of displayed video.
An LED for backlight is mounted on a substrate formed with a wiring pattern for electric power supply and must substantially entirely be arranged on a rear surface of a liquid crystal panel. A substrate with LED for backlight mounted will hereinafter be referred to as an LED substrate. For the LED substrates, in terms of handling and cost, a plurality of LED substrates is manufactured in advance with about five to eight LEDs mounted, for example, and the number of the LED substrates corresponding to a size of a liquid crystal panel are arranged and attached to substantially the entire surface of a support plate having a size corresponding to the liquid crystal panel. This enables liquid crystal displaying apparatuses having different screen sizes to share the LED substrates and the effect of increasing productivity is achieved.
PWM (Pulse Width Modulation) control is typically provided as a method of controlling light-emission of LED. A duty ratio of pulse wave is changed with the PWM control to turn on/off LEDs at high speed for light modulation. Attention is increasingly paid to quality deterioration due to a phenomenon of sound generated by vibrations of the LED substrates (sounding) during the light modulation of LED.
For a technique of prevention of the generation of such a sound due to vibrations of the backlight, Patent Document 1 discloses a configuration for preventing generation of a leakage current between a plurality of lamps and generation of sound due to fine vibrations in an edge-light type backlight apparatus having a plurality of lamps disposed on each light incident surface. Two lamps are disposed on each of a pair of opposed side surfaces of a transparent light conductor and a lamp holder holds these lamps via a rubber holder fixing the lamps with a predetermined gap maintained so as not to contact these two lamps with each other.

PRIOR ART DOCUMENT

PATENT DOCUMENT

Patent Document 1: Japanese Laid-Open Patent Publication No. 9-259625

SUMMARY OF THE INVENTION

PROBLEM TO BE SOLVED BY THE INVENTION

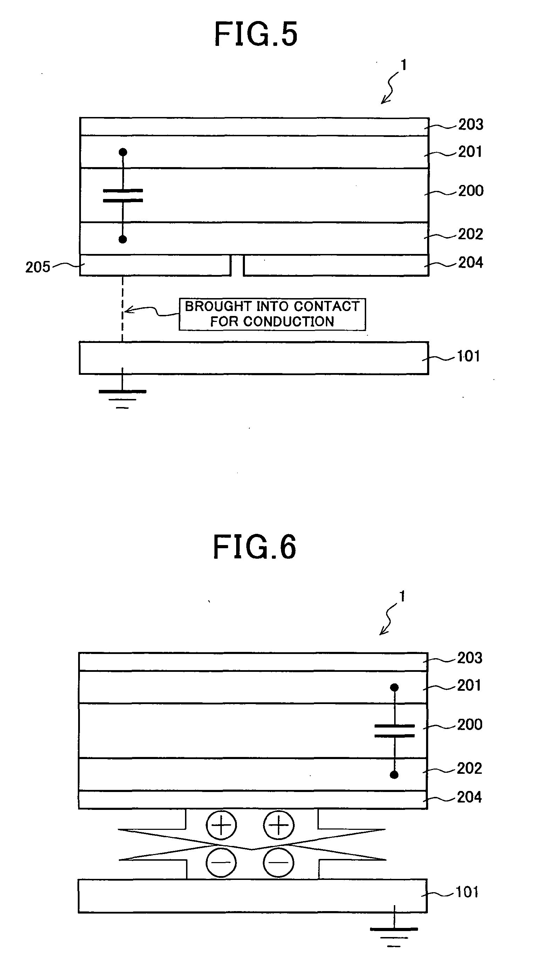

As described above, when LEDs are turned on/off through the PWM control, an LED substrate is vibrated and causes a problem that sounding occurs due to the vibrations and deteriorates quality of an apparatus. A generation mechanism of the sounding of an LED substrate 1 will be described with reference to Fig. 6. In Fig. 6, reference numeral 1 denotes an LED substrate; 101 denotes a backlight chassis; 200 denotes a substrate material making up the LED substrate; 201 denotes a front surface pattern disposed as LED wirings on a front surface of the substrate material 200; 202 denotes a rear surface pattern for heat release and warpage prevention disposed on a rear surface of the substrate material 200; 203 denotes a resist disposed on the front surface pattern 201; and 204 denotes a resist disposed on the rear surface pattern 202.
Although the LED substrate 1 is attached and fixed to the backlight chassis 101, the attachment is somewhat loosely achieved to allow displacement relative to the backlight chassis 101 so as to suppress deformation due to thermal expansion of the LED substrate itself. For example, a glass epoxy substrate is used for the LED substrate 1 and, when a current is applied to turn on LEDs, thermal expansion occurs due to heat generated by the LEDs. In this case, a structure for absorbing the thermal expansion is necessary for suppressing deformation and excess stress of the LED substrate 1. For example, this is implemented by a structure using rivets as members attaching the LED substrate 1 to the backlight chassis 101 such that the LED substrate 1 is somewhat loosely fixed to the backlight chassis 101 so as to allow for the thermal expansion of the LED substrate 1 rather than tightly fixing the LED substrate 1. In this case, at least some of through-holes for inserting the rivets of the LED substrate 1 are formed into a long-hole shape so as to allow the LED substrate 1 to displace relative to the rivets.

For example, causes of vibrations of the LED substrate 1 include electromagnetic vibrations between the LED substrate 1 and the chassis 101 due to increase in a drive voltage of LEDs. On an LED mounting surface of the LED substrate 1, the front surface pattern 201 is disposed that is a wiring pattern of copper foil etc., for driving the LEDs, and the rear surface pattern 202 of copper foil etc., is disposed on the rear side of the LED substrate 1 for promoting heat release from the LED substrate 1 and preventing warpage in a reflow process at the time of mounting of components such as LEDs on the LED substrate 1. Particularly, if the LED substrate 1 is formed into an elongated strip shape, the rear surface pattern 202 for warpage prevention plays important role.

The resist 204 is applied to the rear surface pattern 202 and the rear surface pattern 202 itself is electrically connected to nowhere and floated. If the number of series stages of LEDs increases, a higher voltage must be applied to the LED substrate 1. For safety's sake, an insulating distance must be placed between a GND pattern and a high-voltage pattern (LED wiring pattern).

Although a distance can be placed between the both patterns even if a substrate is elongated in the case of a typical circuit, the LED substrate must have a substantial area of the high-voltage pattern so as to diffuse the heat generated by the LEDs and a sufficient insulating distance cannot be placed in many cases. In the case of a paper phenol substrate etc. in which a through-hole cannot be created, electric components such as LED and connectors are arranged on one (font-side) surface and cannot electrically be connected to the rear surface pattern. In this case, if the high-voltage pattern and the GND pattern are disposed on one surface, the both patterns come closer to each other and a sufficient insulating distance cannot be placed. As a result, it is difficult to dispose the GND pattern on the LED substrate.

The same applies to a substrate of glass epoxy etc., in which a through-hole can be created, if a step of creating a through-hole is omitted to reduce cost of creating the substrate.

In the configuration described above, when the LEDs are modulated through the PWM control, a voltage with a periodic peak is applied to the front surface pattern 201 in accordance with a drive frequency of PWM and the rear surface pattern 202 is charged by capacitive coupling. The electric potential is changed in accordance with PWN drive. When the rear surface pattern 202 is charged, the LED substrate 1 and the backlight chassis 101 are attracted to each other by a coulomb force. The attracting force is changed depending on the electric potential of the rear surface pattern 202 and the LED substrate 1 vibrates. Since the LED substrate 1 is somewhat loosely attached to the backlight chassis 101 by rivets as described above, the LED substrate 1 vibrates itself and periodically hits against the backlight chassis 101, causing the sounding. Such sounding is generated as, for example, a sound of 400 Hz, which is the drive frequency of LED in PWM, as well as a sound on the order of 12 KHz, which is the higher odd harmonic thereof, and since these sounds are both within the human audible range, a sound uncomfortable for a user is generated.

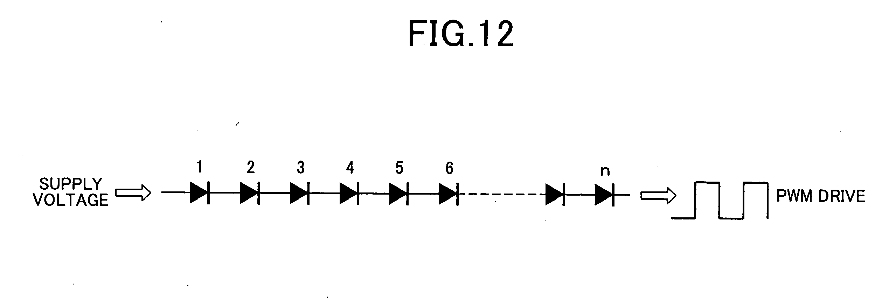

Fig. 12 is a diagram for explaining a state at the time of light modulation of LEDs mounted on an LED substrate. In the configuration employed for an LED backlight, a plurality of LEDs 2 is mounted on the LED substrate 1 and the LEDs 2 are connected in series to make up an LED unit. A plurality of rows of the LED units is arranged in parallel and an LED driver is connected that controls turning on/off of the LEDs for each unit.

In an example of Fig. 12,

n is a total number of LEDs when the LEDs are connected in series;
m is a point of the LEDs counted from the supply voltage side (m=1, 2, 3, ...n);
VfA is a forward voltage when a desired current is applied; and
VfB is a voltage in the forward voltage direction generated when a leakage current is applied.

A voltage at the point (m) of each LED in the case of connecting the LEDs in series is represented by a calculation formula. A supply voltage in this case must be at least a voltage acquired by multiplying the forward voltage vfA when a desired current is applied, by a total number of the LEDs connected in series.
This is represented as follows:

$$\text{supply voltage} = VfA \times n \qquad \ldots (1).$$

When the LEDs are turned on (during ON-period), an anode voltage of LED at each point (m) is reduced by first to mth VfA and represented by the following equation:

$$\texttt{anode voltage (ON-period) = VfA×n-(m-1)×VfA} \quad …(2).$$

On the other hand, when the LEDs are turned off (during OFF-period), an anode voltage of LED at each point (m) is reduced by first to mth VfB and represented by the following equation:

$$\texttt{anode voltage (OFF-period) = VfB×n-(m-1)×VfB} \quad …(3).$$

A relationship of VfA>VfB is generally satisfied.

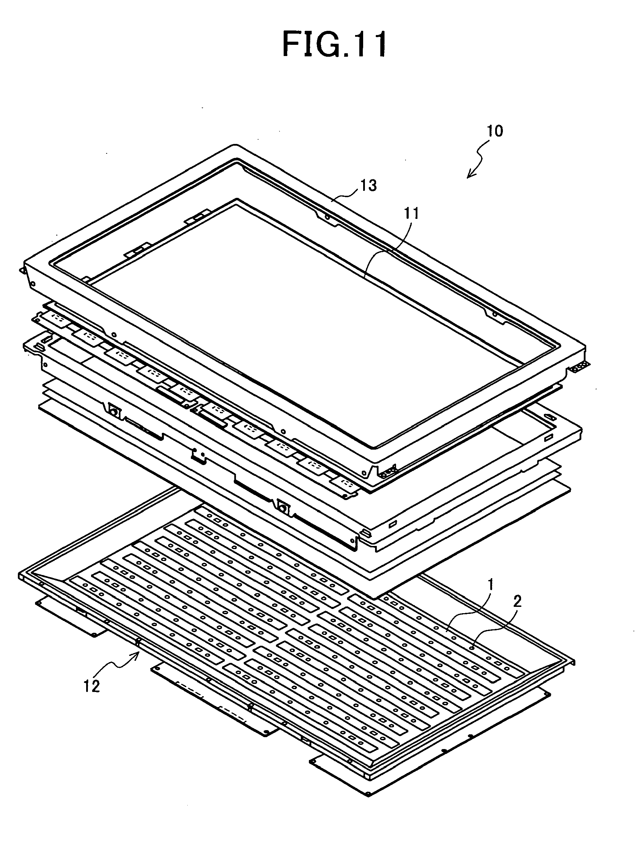

In a reference example of VfA=3.6V, VfB=2.4V, and n=20, Fig. 11 depicts results of obtaining anode voltages during ON/OFF periods and voltage differences therebetween by substituting these values in Eq. (2) and Eq. (3). As can be seen from the example of Fig. 11, a difference of the anode voltages of the LEDs connected in series is smaller on the side closer to the supply voltage and increases when the LEDs are further from the supply voltage. Therefore, amplitude of a voltage applied to the front surface pattern 201 is smaller on the side closer to the supply voltage. In this case, unless the electric potential of the rear surface pattern 202 is fixed, the energy of the front surface pattern 201 is coupled to the pattern on the rear surface by electrostatic coupling. The energy becomes larger on the side having larger amplitude of the voltage in the front surface pattern 201.

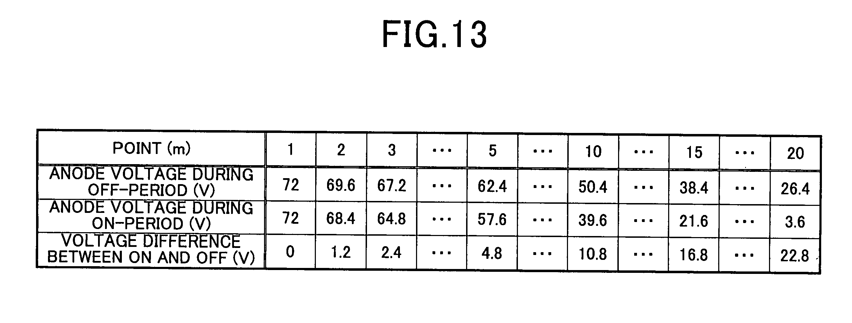

Although an example of n=20 has been described with reference to the example of Fig. 13, as the number of LEDs connected in series increases, the voltage difference between ON/OFF periods becomes greater and the amplitude of the voltage in the front surface pattern 201 becomes larger when the LEDs are further from the supply voltage.

As described above, when the electrostatic coupling is achieved between the front surface pattern 201 and the rear surface pattern 202, and the LED substrate 1 and the backlight chassis 101 are attracted to each other and vibrated by a coulomb force, a phenomenon occurs that the vibrations become larger on the side further from the power supply.

Therefore, in an LED backlight having a plurality of LEDs connected in series and mounted on a substrate (particularly, on an elongated strip-shaped substrate) to drive these LEDs through PWM and the LED backlight configured by forming the rear surface pattern 202 electrically floated for heat release and warpage prevention on the rear surface side of the LED substrate 1 and by attaching the LED substrate 1 to the backlight chassis 101 such that the substrate is allowed to deformed to some extent due to thermal expansion etc., since the electrostatic coupling is achieved between the front surface pattern 201 and the rear surface pattern 202, and the LED substrate 1 and the backlight chassis 101 are attracted to each other by a coulomb force and cause the vibrations of the LED substrate 1 in accordance with the drive frequency of the PWM, a problem occurs that the sounding uncomfortable to a user is generated, and a technique is required for solving the problem.

The present invention was conceived in view of the situations and it is therefore an object of the present invention to suppress generation of sound due to vibrations of an LED substrate used in an LED backlight and to provide a high-quality liquid crystal displaying apparatus and a television receiving apparatus including the liquid crystal displaying apparatus.

MEANS FOR SOLVING THE PROBLEM

To solve the problem, a first technical means of the present invention is a liquid crystal displaying apparatus comprising a liquid crystal panel; a backlight using LED illuminating the liquid crystal panel; and a chassis to which a substrate disposed with the LED is attached, when the substrate is provided with an electrically conductive pattern on a surface opposite to a surface disposed with the LED and the electrically conductive pattern is grounded.

A second technical means is the first technical means wherein an electrically conductive tape is affixed onto the electrically conductive pattern, and the substrate is attached to the chassis such that the electrically conductive tape is brought into contact with the chassis.

A third technical means is the second technical means wherein a resist is disposed on a surface of the substrate, and the resist is partially peeled off in an area of the attachment of the electrically conductive tape to contact the electrically conductive pattern with the electrically conductive tape.

A fourth technical means is the first technical means wherein the electrically conductive pattern is grounded by bringing the electrically conductive pattern into contact with the chassis.

A fifth technical means is the first technical means wherein a resist is disposed on the electrically conductive pattern except a predetermined area, the predetermined area is disposed with a solder mound on the electrically conductive pattern, and the electrically conductive pattern is grounded by connecting the electrically conductive pattern via the solder mound to the chassis.

A sixth technical means is the first technical means wherein an electrically conductive sheet is disposed on the electrically conductive pattern, and the substrate is attached to the chassis such that the electrically conductive sheet is brought into contact with the chassis.

A seventh technical means is the first technical means wherein the substrate is disposed with a pattern for driving the LED and a ground pattern on the surface disposed with the LED, and the electrically conductive pattern is grounded by connecting the ground pattern via a through-hole to the electrically conductive pattern.

An eighth technical means is a television receiving apparatus comprising the liquid crystal displaying apparatus of the first to seventh technical means.

EFFECT OF THE INVENTION

According to the present invention, the generation of the sound due to the vibrations of the LED substrates used in the LED backlight can be suppressed to provide the high-quality liquid crystal displaying apparatus.

BRIEF DESCRIPTION OF DRAWINGS

[Fig. 1] Fig. 1 is a diagram of an exemplary configuration of a backlight applicable to a liquid crystal displaying apparatus of the present invention.

[Fig. 2] Fig. 2 is a diagram of another exemplary configuration of a backlight applicable to the liquid crystal displaying apparatus of the present invention.

[Fig. 3] Fig. 3 is a diagram of an exemplary configuration of an LED substrate and depicts an exemplary pattern configuration of an LED-mounted surface of the LED substrate.

[Fig. 4] Fig. 4 is a diagram of an exemplary configuration of the LED substrate and depicts an exemplary pattern configuration on the rear side of the LED-mounted surface of the LED substrate.

[Fig. 5] Fig. 5 is a schematic of a positional relationship between the LED substrate and a backlight chassis.

[Fig. 6] Fig. 6 is a diagram for explaining a generation mechanism of sounding of a conventional LED substrate.

[Fig. 7] Fig. 7 is a diagram for explaining another exemplary configuration of grounding of a rear surface pattern.

[Fig. 8] Fig. 8 is a diagram for explaining yet another exemplary configuration of grounding of a rear surface pattern 202.

[Fig. 9] Fig. 9 is a diagram for explaining a further exemplary configuration of grounding of the rear surface pattern 202.

[Fig. 10] Fig. 10 is an exploded perspective view of a general configuration of a television receiving apparatus of the present invention.

[Fig. 11] Fig. 11 is an exploded perspective view of a liquid crystal displaying apparatus included in the television receiving apparatus.

[Fig. 12] Fig. 12 is a diagram for explaining a state of light modulation of LEDs mounted on the LED substrate.

[Fig. 13] Fig. 13 is a diagram of specific examples of anode voltages of LEDs connected in series and voltage differences between ON/OFF periods.

MODES FOR CARRYING OUT THE INVENTION

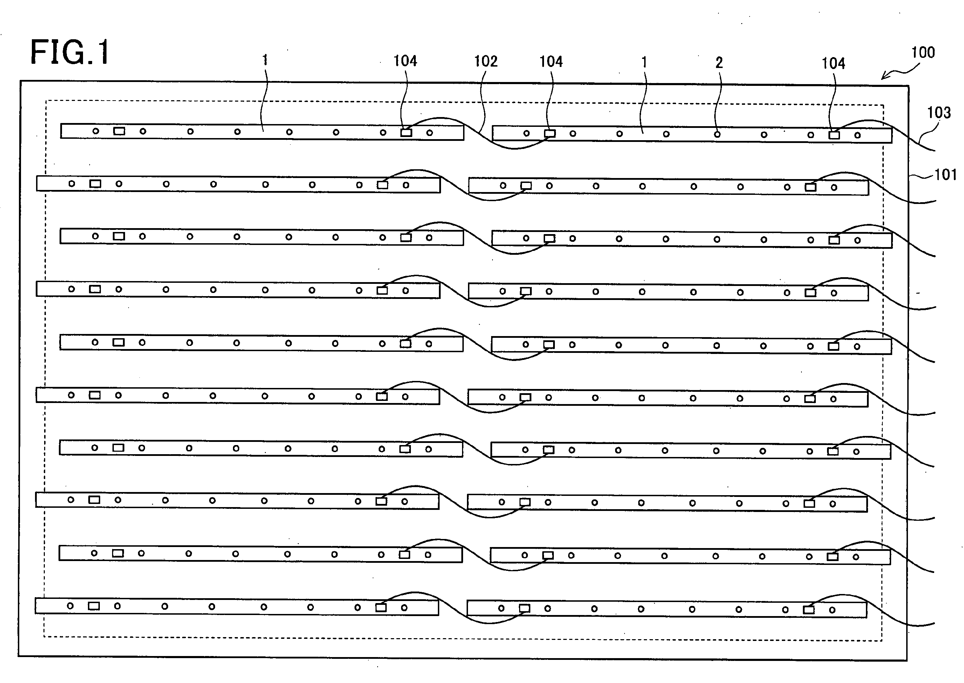

Fig. 1 is a diagram of an exemplary configuration of a backlight applicable to a liquid crystal displaying apparatus of the present invention. The backlight of this example is configured as an array-type LED backlight.

An LED backlight 100 has a plurality of LED substrates 1 arranged on a backlight chassis 101. The LED substrates 1 have a laterally-elongated rectangular strip shape and are arranged such that the longitudinal direction of the rectangle matches the horizontal direction of a screen of the liquid crystal displaying apparatus.

The example of Fig. 1 is exemplarily illustrated as the array-type LED backlight 100 applied to a liquid crystal displaying apparatus with a 40-inch screen. In this example, the LED substrates 1 are horizontally divided into two parts, and ten rows each including two of the LED substrates 1 are vertically arranged.

For the LED substrates 1, a plurality of the LED substrates 1 is manufactured in advance with about five to eight LEDs mounted, for example, and the number of the LED substrates 1 corresponding to a size of a liquid crystal panel are arranged and attached to an area corresponding to the liquid crystal panel. The LED substrates 1 are fixed to the backlight chassis 101. As a result, the LED substrates 1 are shared by the liquid crystal displaying apparatuses having different screen sizes, and the effect of increasing productivity is acquired from the component sharing.

Each of the LED substrates 1 has a plurality of (in this example, eight) linearly arranged LEDs 2. In an example of the array-type LED backlight 100 of Fig. 1, a total of the 160 LEDs 2 are used in the entire screen.

The LEDs 2 mounted on each of the LED substrates 1 are connected to each other in series by a wiring pattern (not depicted) formed on each of the LED substrates 1. By connecting two of the LED substrates 1 arranged in the horizontal direction to a harness 102, the two LED substrates 1 form a unit with a plurality of LEDs connected in series. Between the LED substrates 1 making up one unit, one of the LED substrates 1 is disposed with a harness 103 for connecting an external driver substrate. Each of the LED substrates 1 is disposed with connectors 104 connected to the harnesses 102, 103. Each of the LED substrates 1 is fixed to the backlight chassis 101 by a rivet not depicted located near each of the connectors 104. As described above, the rivets are used for suppressing deformation and excess stress of the LED substrates 1 thermally-expanded at the time of light modulation, and the LED substrates 1 are somewhat loosely fixed to the backlight chassis 101 so as to allow for the thermal expansion of the LED substrates 1 rather than tightly fixing the LED substrates 1.

Although the two LED substrates 1 are used to make up the unit having a plurality of the LEDs 2 connected in series in the example described above, one unit may be made up of one LED substrate or may be made up of three or more LED substrates.

The LED backlight 100 includes an LED driver loaded on the driver substrate (drive circuit substrate) not depicted. The LED driver supplies a current to the LEDs 2 connected in series to drive the LEDs 2 through PWM (pulse width modulation) control. Therefore, the units vertically arranged in a plurality of rows can respectively be driven independently of each other.

The number of LEDs normally varies depending on a screen size. Although the number of the units each made up of the two LED substrates 1 is ten in the liquid crystal displaying apparatus with a 40-inch screen of the example described above, for example, the number of the units is nine in the case of a 32-inch screen; the number of the units is twelve in the case of a 46-inch screen; and the number of the units of the LED substrates 1 (i.e., the number of LEDs) is changed as needed depending on a size of a screen, necessary brightness, etc. These numbers of LEDs and the numbers of LEDs per substrate are described as examples, and the number of LEDs and the number of units are not limited in the present invention.

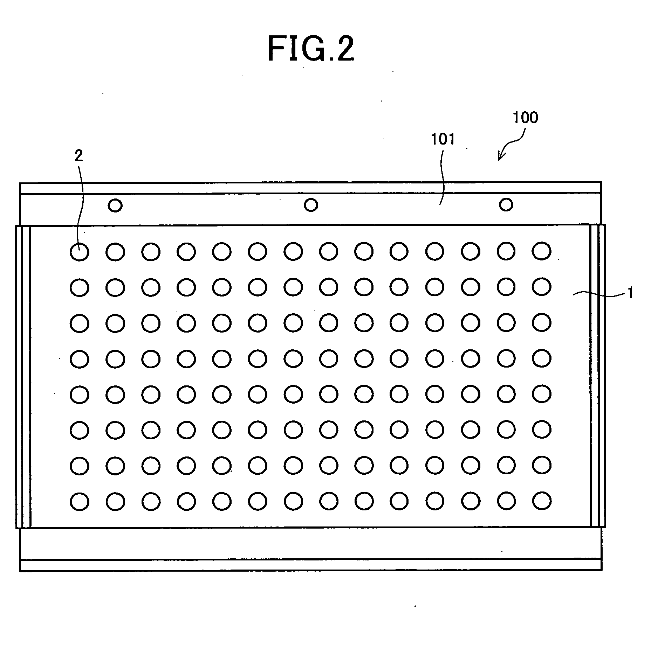

The LED substrates are not limited to those having a laterally-elongated rectangular strip shape as described above. For example, as depicted in Fig. 2, the LED substrate 1 corresponding to a size of a screen of LCD may be disposed inside the backlight chassis 1 and a plurality of the LEDs 2 may be arranged in a matrix shape on the LED substrate 1. The present invention will hereinafter be described in terms of embodiments related to the LED substrate 1 of a laterally-elongated strip shape.

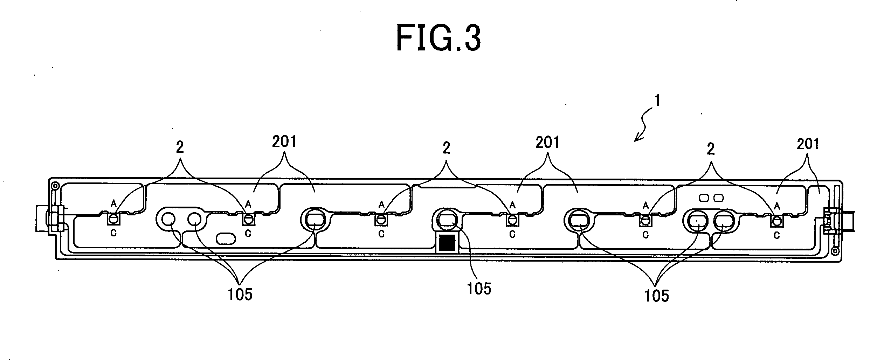

Fig. 3 is a diagram of an exemplary configuration of an LED substrate and depicts an exemplary pattern configuration of an LED-mounted surface of the LED substrate. In this example, six LEDs 2 are arranged on one LED substrate 1 and these LEDs 2 are connected in series by a pattern 201. In Fig. 3, A and C respectively indicate positions of an anode and a cathode of the LED 2. A surface with the LEDs 2 mounted is defined as a front surface and the pattern 201 is referred to as a front surface pattern. Although a resist is disposed on the front surface pattern 201, the resist is not depicted.

The LED substrate 1 can be made of glass epoxy, for example. The front surface pattern 201 is typically a copper pattern. The LED substrate 1 is attached to a chassis by using a plurality of rivets not depicted. Through-holes 105 for inserting the rivets are formed in portions on which the rivets of the LED substrate 1 are mounted. At least some of the through-holes 105 are formed into a long-hole shape so as to release stress even if the LED substrate 1 is thermally expanded due to generation of heat by the LEDs 2.

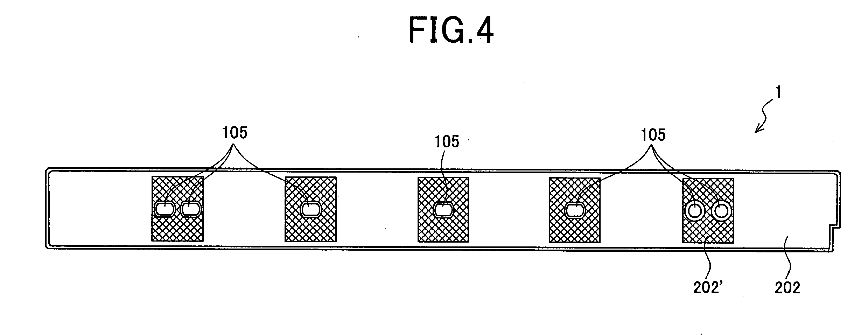

Fig. 4 is a diagram of an exemplary configuration of the LED substrate and depicts an exemplary pattern configuration on the rear side of the LED-mounted surface of the LED substrate. On the rear surface (surface opposite to the surface on which the LEDs 2 are mounted) of the LED substrate 1, a rear surface pattern 202 is formed from copper foil. Although a resist is disposed on the rear surface pattern 202, the resist is not depicted.

The rear surface pattern 202 is disposed for releasing heat due to the heat generation of the LEDs 2 and for preventing warpage of the LED substrate 1 itself. With regard to the warpage prevention, the LED substrate 1 is symmetrically configured between the front and rear sides with the front surface pattern 201 and the rear surface pattern 202 so as to prevent the warpage of the LED substrate 1 due to heat at the time of the reflow process when components such as the LEDs 2 are mounted, for example. To implement such a function, the rear surface pattern acts as an important constituent element in the configuration having the pattern 201 for driving the LEDs disposed only on the surface on which the LEDs 2 are mounted. Particularly, when the LED substrate 1 is configured in an elongated strip shape as depicted in Fig. 1, the rear surface pattern 202 for the warpage prevention is necessary. Although the rear surface pattern 202 is solidly disposed on substantially the entire area of the rear surface of the LED substrate 1, the peripheries of the through-holes 105 for inserting the rivets may be formed as a meshed pattern 202' as depicted in Fig. 4 in such a manner as to avoid thermal interference between adjacent LEDs.

When the LED substrate 1 is manufactured, the front surface pattern 201, the rear surface pattern 202, and the resists are formed on a substrate of, for example, glass epoxy used for the LED substrate 1. The patterns and the resists are formed by means of an etching method etc. The LEDs 2 and the connectors 104 are mounted on the substrate by using reflow soldering. As described above, the rear surface pattern 202 is disposed so as to prevent warpage of the LED substrate 2 due to the reflow soldering. Components such as the LEDs 2 and the connectors 104 are mounted in accordance with lands of the pattern with cream solder applied, and the cream solder is heated and melted in a reflow furnace. As a result, electrodes of the components are electrically connected to land portions. The acquired LED substrates 1 are fixed to the backlight chassis 101 by using fixing members such as rivets and the connectors 104 of the LED substrates 1 are connected.

Fig. 5 is a schematic of a positional relationship between the LED substrate and the backlight chassis. A substrate material 200 making up the LED substrate 1 is provided with the front surface pattern 201 and a plurality of the LEDs 2 (not depicted in Fig. 5) is mounted at predetermined positions. The plurality of the LEDs 2 is connected in series by the front surface pattern 201. A resist 203 is disposed on the front surface pattern 201 except mounting portions for electronic components such as LEDs.

The rear surface pattern 202 is disposed on the rear surface side of the LED substrate 1. A resist 204 is disposed on the rear surface pattern. The LED substrate 1 is attached and held on the backlight chassis 101 by the rivets via gaps. In the portions where the LED substrate 1 is held by the rivets, the LED substrate 1 naturally comes into contact with the backlight chassis 101; however, since the resist 204 is disposed on the surface of the LED substrates 1, the LED substrate 1 and the backlight chassis 101 are electrically insulated with each other. The LED substrate 1 is held via gaps so as to allow the LED substrate 1 to move to some extent on the backlight chassis 101 so as to absorb the thermal expansion of the LED substrate 1.

Therefore, the rear surface pattern 202 disposed on the LED substrate 1 is electrically connected to nowhere and floated in this state. In an embodiment according to the present invention, the rear surface pattern 202 is grounded to prevent the LED substrate 1 from vibrating.

If the rear surface pattern 202 itself is electrically connected to nowhere and floated as described above, when LEDs are modulated through the PWM control, a voltage with a periodic peak is applied to the front surface pattern 201 in accordance with a drive frequency of PWM and the rear surface pattern 202 is charged by capacitive coupling. When the rear surface pattern 202 is charged, the LED substrate 1 and the backlight chassis 101 are attracted to each other by a coulomb force and the attracting force is changed depending on the electric potential of the rear surface pattern 202, causing vibrations of the LED substrate 1. In this state, a phenomenon occurs that the vibrations become larger on the side (the return side) further from the electric supply.

In contrast, for example, if the LED substrate 1 is attached to the backlight chassis 101 separated from GND, no sounding occurs because the LED substrate 1 and the backlight chassis 101 vibrate in the same phase. However the backlight chassis 101 must be set to the GFD potential for countermeasures against unnecessary radiation, the sounding inevitably occurs in the configuration described above.

To suppress the sounding generated by the vibrations of the LED substrate 1, in the embodiment according to the present invention, the rear surface pattern 202 is grounded to prevent the LED substrate 1 from vibrating. As a result, the electric potential of the rear surface pattern 202 is fixed to GND and, therefore, the vibrations due to interaction with the backlight chassis 101 can be suppressed.

Specifically, since the coulomb force is exerted between the front surface pattern 201 and the rear surface pattern 202 by grounding the rear surface pattern 202 and no coulomb force is exerted between the LED substrate 1 and the backlight chassis 101, the LED substrate 1 does not vibrate. Therefore, the generation of sounding caused by the vibrations of the LED substrate 1 can be suppressed.

Although a configuration of grounding the rear surface pattern 202 is not limited to a particular configuration, a grounding configuration of the rear surface pattern 202 can be acquired in one embodiment by affixing an electrically conductive tape 205 to the rear surface of the LED substrate and by attaching the electrically conductive tape 205 such that the tape is brought into contact for conduction with the backlight chassis 101.

In this case, since the electrically conductive tape 205 must be in contact with the rear surface pattern 202, the electrically conductive tape 205 is affixed after the resist 204 is peeled off from the portion to which the electrically conductive tape 205 is affixed. Although the application position of the electrically conductive tape 205 is not particularly limited, for example, if the position is near the through-hole 105 for inserting the rivet, the grounding configuration with the backlight chassis 101 is facilitated. Although copper, aluminum, or a base material of electrically conductive fiber with electrically conductive adhesive applied is available for the electrically conductive tape 205, a configuration of the electrically conductive tape is not limited in the embodiment according to the present invention.

In another exemplary configuration of grounding of the rear surface pattern 202, the resist 204 on the rear surface of the substrate material is eliminated and only the rear surface pattern 202 is stacked on the rear surface side of the substrate material 200. The rear surface pattern 202 is made of copper foil or solder plating, for example. In this case, the resist is not applied onto the rear surface pattern 202 and the copper foil or the solder plating of the rear surface pattern 202 is exposed. Therefore, when the LED substrate 1 is attached to the backlight chassis 101, since at least a portion of the rear surface pattern 202 contacts the backlight chassis 101 and no coulomb force is exerted between the LED substrate 1 and the backlight chassis 101, the LED substrate 1 does not vibrate. If copper foil is used for the rear surface pattern 202, the copper foil may gradually be oxidized, increasing a contact resistance. Therefore, preferably, the solder plating hardly causing oxidization of a contact interface is used for the rear surface pattern 202 to maintain the contact resistance to the backlight chassis.

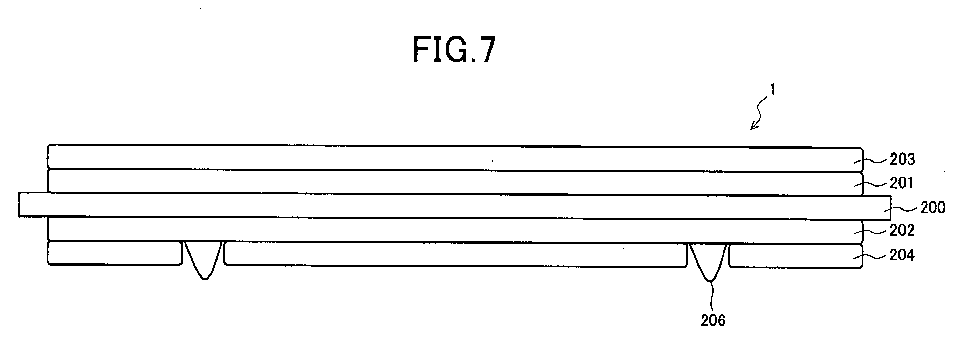

In yet another exemplary configuration of grounding of the rear surface pattern 202, only a portion of the resist 204 is eliminated on the rear surface side of the substrate material 200 and a solder mound etc., are formed on the portion. Fig. 7 is a diagram of an exemplary configuration in this case. As depicted in Fig. 7, the resist 204 is not disposed on a predetermined area and a solder mound 206 is formed by reflow on the area. The predetermined area is defined as an area allowing the solder mound 206 to contact with the backlight chassis 101 when the LED substrate 1 is attached to the backlight chassis 101. As a result, the rear surface pattern 202 is brought into contact with the backlight chassis 101 and grounded via the solder mound 206.

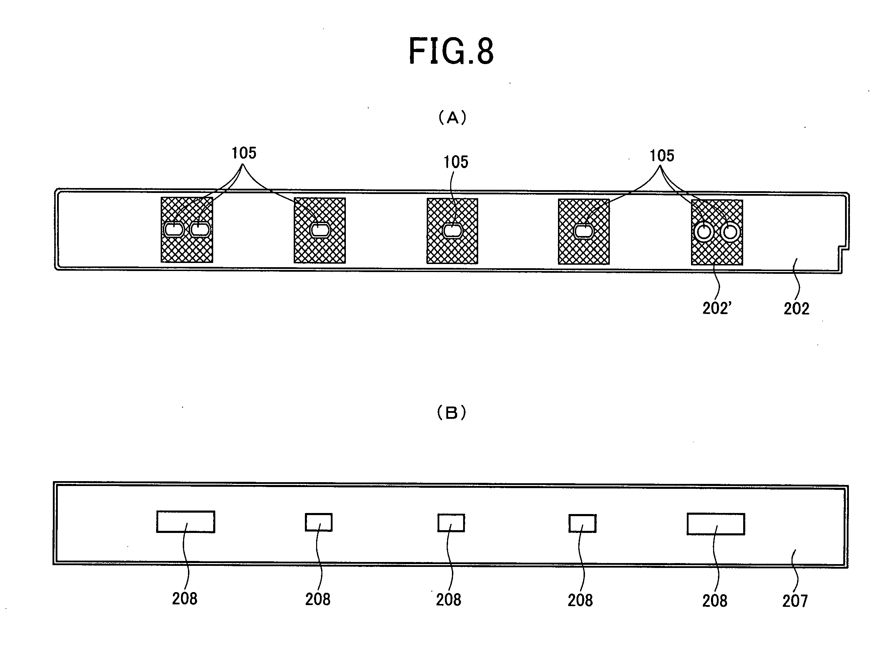

In still another exemplary configuration of grounding of the rear surface pattern 202, an electrically conductive sheet may be used instead of the electrically conductive tape 205. For example, the rear surface side of a substrate as depicted in Fig. 8 (A) is overlapped by an elastic electrically conductive sheet 207 as depicted in Fig. 8(B) to form an LED substrate. In this case, the resist 204 (not depicted in Fig. 8) applied onto the rear surface pattern 202 is completely or partially eliminated to contact the rear surface pattern 202 with the electrically conductive sheet 207. When the LED substrate 1 is attached to the backlight chassis 101, the electrically conductive sheet 207 is sandwiched by the rear surface pattern 202 and the backlight chassis 101. As a result, the rear surface pattern 202 is grounded to the backlight chassis 101 via the electrically conductive sheet 207.

In this case, through-holes 208 for inserting the rivets are formed in the electrically conductive sheet 207. A sheet coated with adhesive may be used as the electrically conductive sheet 207 such that the sheet is affixed onto the resist 204 and the rear surface pattern 202, or the electrically conductive sheet 207 may be sandwiched between the rear surface pattern 202 and the backlight chassis 101 without using adhesive.

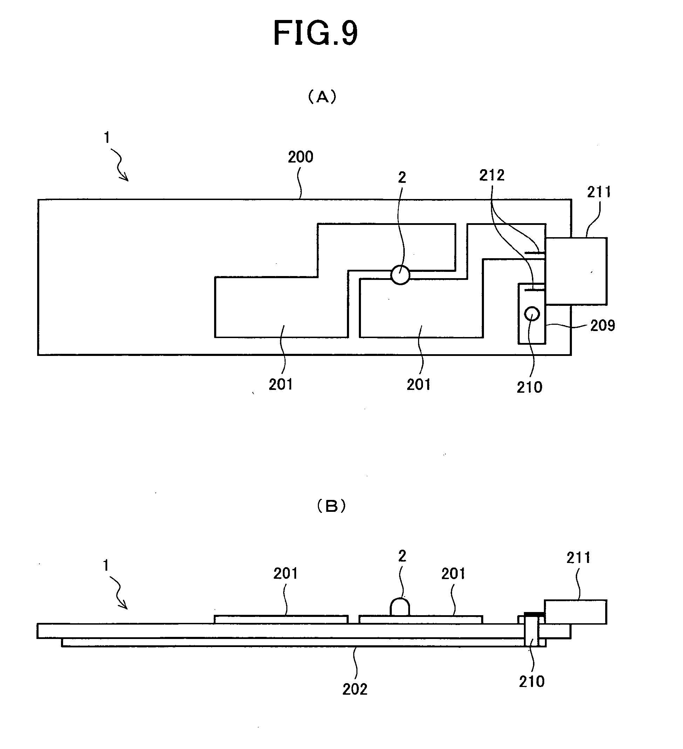

Fig. 9 is a diagram for explaining a further exemplary configuration of grounding of the rear surface pattern 202; Fig. 9 (A) is a schematic of the top surface of the LED substrate 1; Fig. 9(B) is a schematic of a side cross-section of the LED substrate 1; and a connector and an LED attached to the LED substrate 1 are also depicted. The resists disposed on the front and rear surfaces are not depicted.

Although it is generally difficult to place a ground pattern on the LED substrate as described above, if a ground line can be defined on the LED substrate by devising a pattern and a connector, the rear surface pattern 202 can be configured to be grounded so as not to exert the coulomb force between the LED substrate 1 and the backlight chassis 101.

In the exemplary configuration of Fig. 9, the front surface pattern 201 acting as a high voltage pattern driving the LED 2 and a ground pattern 209 are formed on the front surface side of the substrate material 200. To ensure an insulating distance by separating the front surface pattern 201 from the ground pattern 209 as much as possible, the ground pattern 209 is formed as a pattern of a small area connected to a terminal 212 of a connector 211 and the ground pattern 209 is connected by a through-hole 210 to the rear surface pattern 202. With this configuration, the rear surface pattern 202 is grounded so as not to exert the coulomb force between the LED substrate 1 and the backlight chassis 101, thereby suppressing the vibrations of the LED substrate 1.

Instead of the example of Fig. 9, the ground pattern can be disposed on the rear surface side to ground the rear surface pattern 202.

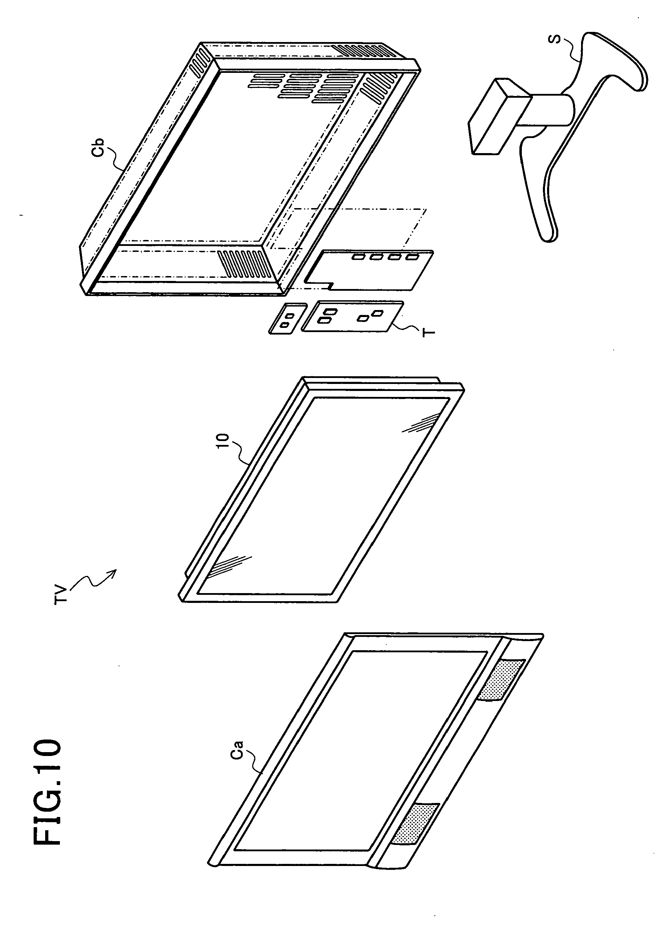

As depicted in Fig. 10, a television receiving apparatus TV according to this embodiment includes a liquid-crystal displaying apparatus 10, both front and back cabinets Ca, Cb housing the liquid-crystal displaying apparatus 10 in a sandwiched manner, a power source P, a tuner T, and a stand S. The liquid-crystal displaying apparatus 10 forms a laterally-elongated square shape (rectangular shape) as a whole and is housed in a horizontally-placed state. As depicted in Fig. 11, the liquid-crystal displaying apparatus 10 includes a liquid-crystal panel 11 that is a displaying panel and a backlight apparatus (illuminating apparatus) 12 that is an external light source, which are integrally retained by a frame-shaped bezel 13 etc. In this embodiment, a liquid crystal displaying apparatus having a 42-inch screen size and an aspect ratio of 16:9 is exemplarily illustrated.

EXPLANATIONS OF LETTERS OR NUMERALS

1...LED substrate; 2...LED; 10...liquid crystal displaying apparatus; 11...liquid crystal panel; 12...backlight apparatus; 13...bezel; 100...LED backlight; 101...backlight chassis; 102...harness; 103...harness; 104...connector; 105...through-hole; 200...substrate material; 201...front surface pattern; 202...rear surface pattern; 203, 204...resist; 205...electrically conductive tape; 206...solder mound; 207...electrically conductive sheet; 208...through-hole; 209...ground pattern; 210...through-hole; 211...connector; and 212...terminal.

**Claims**

1.  A liquid crystal displaying apparatus comprising: a liquid crystal panel; a backlight using LED illuminating the liquid crystal panel; and a chassis to which a substrate disposed with the LED is attached, wherein the substrate is provided with an electrically conductive pattern on a surface opposite to a surface disposed with the LED, and the electrically conductive pattern is grounded.

2.  The liquid crystal displaying apparatus as defined in claim 1, wherein an electrically conductive tape is affixed onto the electrically conductive pattern, and the substrate is attached to the chassis such that the electrically conductive tape is brought into contact with the chassis.

3.  The liquid crystal displaying apparatus as defined in claim 2, wherein a resist is disposed on a surface of the substrate, and the resist is partially peeled off in an area of the attachment of the electrically conductive tape to contact the electrically conductive pattern with the electrically conductive tape.

4.  The liquid crystal displaying apparatus as defined in claim 1, wherein the electrically conductive pattern is grounded by bringing the electrically conductive pattern into contact with the chassis.

5.  The liquid crystal displaying apparatus as defined in claim 1, wherein a resist is disposed on the electrically conductive pattern except a predetermined area, the predetermined area is disposed with a solder mound on the electrically conductive pattern, and the electrically conductive pattern is grounded by connecting the electrically conductive pattern via the solder mound to the chassis.

6.  The liquid crystal displaying apparatus as defined in claim 1, wherein an electrically conductive sheet is disposed on the electrically conductive pattern, and the substrate is attached to the chassis such that the electrically conductive sheet is brought into contact with the chassis.

7.  The liquid crystal displaying apparatus as defined in claim 1, wherein the substrate is disposed with a pattern for driving the LED and a ground pattern on the surface disposed with the LED, and the electrically conductive pattern is grounded by connecting the ground pattern via a through-hole to the electrically conductive pattern.

8.  A television receiving apparatus comprising: the liquid crystal displaying apparatus as defined in any one of claims 1 to 7.

FIG.1

EP 2 492 742 A1

# FIG.2

# FIG.3

# FIG.4

EP 2 492 742 A1

# FIG.5

BROUGHT INTO CONTACT
FOR CONDUCTION

# FIG.6

EP 2 492 742 A1

# FIG.7

# FIG.8

（A）

105   105   105

202'   202

（B）

208   208   208   208   208   207

EP 2 492 742 A1

# FIG.9

(A)

(B)

# FIG.10

TV

Ca

10

Cb

T

S

# FIG.11

# FIG.12

SUPPLY VOLTAGE ⟹ →▶|→▶|→▶|→▶|→▶|→▶|－ − − − −▶|→▶|→ ⟹ ⎍⎍ PWM DRIVE

1  2  3  4  5  6          n

EP 2 492 742 A1

# FIG.13

EP 2 492 742 A1

| POINT (m) | 1 | 2 | 3 | ··· | 5 | ··· | 10 | ··· | 15 | ··· | 20 |
|---|---|---|---|---|---|---|---|---|---|---|---|
| ANODE VOLTAGE DURING OFF-PERIOD (V) | 72 | 69.6 | 67.2 | ··· | 62.4 | ··· | 50.4 | ··· | 38.4 | ··· | 26.4 |
| ANODE VOLTAGE DURING ON-PERIOD (V) | 72 | 68.4 | 64.8 | ··· | 57.6 | ··· | 39.6 | ··· | 21.6 | ··· | 3.6 |
| VOLTAGE DIFFERENCE BETWEEN ON AND OFF (V) | 0 | 1.2 | 2.4 | ··· | 4.8 | ··· | 10.8 | ··· | 16.8 | ··· | 22.8 |

**INTERNATIONAL SEARCH REPORT**

| International application No. |
| --- |
| PCT/JP2010/068664 |

A. CLASSIFICATION OF SUBJECT MATTER
*G02F1/13357*(2006.01)i, *F21S2/00*(2006.01)i, *F21V23/00*(2006.01)i,
*G02F1/1333*(2006.01)i, *F21Y101/02*(2006.01)n

According to International Patent Classification (IPC) or to both national classification and IPC

B. FIELDS SEARCHED

Minimum documentation searched (classification system followed by classification symbols)
G02F1/13357, F21S2/00, F21V23/00, G02F1/1333, F21Y101/02

Documentation searched other than minimum documentation to the extent that such documents are included in the fields searched
Jitsuyo Shinan Koho        1922-1996    Jitsuyo Shinan Toroku Koho    1996-2010
Kokai Jitsuyo Shinan Koho  1971-2010    Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2008-41641 A  (Samsung Electronics Co.,<br>Ltd.),<br>21 February 2008 (21.02.2008),<br>paragraphs [0025] to [0033], [0039], [0040],<br>[0093] to [0096], [0101] to [0103]; fig. 1, 2,<br>11, 12<br>& US 2008/0030645 A1    & KR 10-2008-0012519 A<br>& CN 101118051 A | 1,2,4,6-8<br>3,5 |
| X<br>A | JP 2005-283852 A  (Kyocera Corp.),<br>13 October 2005 (13.10.2005),<br>paragraphs [0044] to [0052]; fig. 1 to 5<br>(Family: none) | 1,2,4,6-8<br>3,5 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    22 November, 2010 (22.11.10) | Date of mailing of the international search report<br>    30 November, 2010 (30.11.10) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/068664 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2008-129134 A  (Sharp Corp.),<br>05 June 2008 (05.06.2008),<br>paragraphs [0037] to [0042]; fig. 1 to 4<br>(Family: none) | 1,2,4,6-8<br>3,5 |
| A | JP 2009-58768 A  (Showa Denko Kabushiki Kaisha),<br>19 March 2009 (19.03.2009),<br>paragraphs [0023] to [0026]; fig. 3<br>& US 2009/0059117 A1     & WO 2009/028440 A1 | 3,5 |
| A | JP 2002-232009 A  (Harison Toshiba Lighting Corp.),<br>16 August 2002 (16.08.2002),<br>paragraphs [0031] to [0033], [0036], [0037];<br>fig. 2, 3<br>(Family: none) | 3,5 |

Form PCT/ISA/210 (continuation of second sheet) (July 2009)

**INTERNATIONAL SEARCH REPORT**

International application No.

PCT/JP2010/068664

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
```
     The matter common to the inventions in claims [1 - 3], [4], [5], [6], [7]
 and [8] is relevant to the matter set forth in claim 1.
     However, the invention in claim 1 is disclosed in the documents 1 - 3.
                                           (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (July 2009)

**INTERNATIONAL SEARCH REPORT**

International application No.

PCT/JP2010/068664

Continuation of Box No.III of continuation of first sheet(2)

Namely, the search revealed that the above-said common matter (the invention in claim 1) is disclosed in the documents 1 - 3 and the invention in claim 2 is disclosed in the document 3, and therefore said inventions are not novel. As a result, the above-said common matter is not a special technical feature in the meaning of the second sentence of PCT Rule 13.2, since said common matter does not make a contribution over the prior art.

Therefore, there is no matter common to the inventions in claims [1 - 3], [4], [5], [6], [7] and [8], any technical relationship in the meaning of PCT Rule 13 cannot be found among those inventions.

Consequently, it is obvious that the inventions in claims [1 - 3], [4], [5], [6], [7] and [8] do not comply with the requirement of unity of invention.

Form PCT/ISA/210 (extra sheet) (July 2009)

**EP 2 492 742 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9259625 A